# EUROPEAN PATENT APPLICATION

(11) **EP 1 702 838 A2**
(43) Date of publication of application: **20.09.2006**
(21) Application number: 06111052.4
(22) Date of filing: 13.03.2006
(51) Int. Cl.: B62K 13/00

(54) **Assembly for converting a road vehicle into a snow vehicle and converted snow vehicle**

(30) Priority: 15.03.2005 IT BS20050039
(71) Applicant: Corimba S.n.c. di Bettini Cesare & C., 25080 Nuvolento (BS) (IT)
(72) Inventor: Bettini, Cesare, 25085 Gavardo (Brescia) (IT); Bettini, Luca, 25085 Gavardo (Brescia) (IT); Bettini, Mauro, 25085 Gavardo (Brescia) (IT)
(74) Representative: Crippa, Paolo Ernesto

(57) **Abstract**

The present invention relates to a conversion assembly suitable for converting a road vehicle into a snow vehicle. The vehicle comprises a wheel (2) and a frame (3). The assembly comprises a ski (14) and connecting means suitable for connecting said ski to said frame and comprising adjustment means suitable for orientating and fixing said ski into a predetermined arrangement relative to the wheel axis.

## Description

The object of the present invention is a conversion assembly for a road vehicle, for example a two wheeler, such as a bike or a motorbike, wherein said assembly is suitable for converting said vehicle into a snow vehicle, that is, a vehicle suitable for moving forward on a snow covered roadbed.

Vehicles suitable for moving forward on a snow covered roadbed are known, comprising a rear wheel, actuated by pedals or motor, sided by two skis, and a front ski connected to a handlebar for determining the vehicle direction.

An example of embodiment according to the above is described, for example, in document EP-A2-799763 by the same Applicant.

However, the market has shown a tendency to avoid the purchase of a vehicle solely intended for the use on a snow covered roadbed.

Some conversion assemblies for bikes or motorbikes have thus been conceived, suitable for converting a road motorbike or a bike into a snow vehicle.

In other words, such assemblies are suitable for being mounted in a simple manner by the user on a road vehicle, for example after removing the front wheel thereof, for transforming the road vehicle into a snow vehicle.

Some embodiments of such assemblies are disclosed, for example, in documents US573034, US773959, CH76384, US1,337,396, US3,561,777, US3,814,198, US3,783,959, US3,931,983, US3,884,484, US3,872,938, US4,168,841, US5,102,153, WO95/14602, US2002/0153677.

However, known solutions in the field exhibit several disadvantages.

Basically, known solutions in the field exhibit a poor adaptability to different types of frames.

In order to meet the requirements mentioned above, such fact constitutes a considerable disadvantage since the purchased assembly may not be suitable for the frame of a bike, to great disappointment of the purchaser. On the other hand, in order to prevent such disadvantage, a manufacturer may be forced to put on the market a range of assemblies, each assembly being suitable for one or a class of frames, with consequent considerable increase of the manufacturing costs and of confusion of the involved purchaser.

The object of the present invention is to overcome the disadvantages mentioned above with reference to the prior art.

Such object is achieved by an assembly obtained according to claim 1. The dependent claims describe embodiment variants.

The features and advantages of the assembly according to the present invention will appear more clearly from the following description, made by way of an indicative and non-limiting example with reference to the following figures, wherein:

**-** figure 1 shows a snow vehicle comprising a conversion assembly according to an embodiment of the present invention;

- figure 2 shows a detail of the vehicle of figure 1 relating to a rear conversion unit of the assembly;

**-** figure 3 shows a plan view of a plate of the rear conversion unit of figure 2;

- figure 4 shows means for orientating the rear conversion unit of figure 1; and

**-** figure 5 shows a clamping unit of a front conversion unit of the assembly of figure 1.

In accordance with the annexed figures, reference numeral 1 globally indicates a snow vehicle, that is, a vehicle suitable for moving on a snow covered roadbed.

Vehicle 1 comprises at least one wheel 2, suitable for rotating about a wheel axis X-X. Said wheel is suitable for cooperating with the snow covered roadbed for moving the vehicle.

Said snow vehicle comprises a frame 3 for the driver's support, coupled to said wheel 2.

Preferably, said frame 3 comprises a first bar 3a and a second bar 3b, converging with each other towards a connecting zone of the vehicle wheel.

According to a preferred embodiment, said snow vehicle further comprises a fork 4, coupled to said frame 3, so as to rotate about a fork axis Z-Z.

Moreover, vehicle 1 comprises a handlebar 6, coupled to fork 4, suitable for being gripped by a driver for determining the vehicle forward direction.

Moreover, vehicle 1 comprises a saddle 8, coupled to frame 3, suitable for the driver's seat.

Vehicle 1 further comprises actuating means suitable for influencing said wheel for placing it into rotation.

According to a preferred embodiment, said actuating means comprise a pair of pedals 12 and driving gears 13 for moving the wheel.

According to an optional embodiment, said actuating means comprise a motor, for example electrical or fuel-powered, suitable for being controlled by the driver.

The conversion assembly comprises at least one ski 14 suitable for supporting and for making said vehicle 1 sliding on said snow covered roadbed.

Preferably, said assembly comprises a pair of skis 14.

Moreover, said assembly comprises connecting means suitable for connecting said ski 14 to said frame 3.

According to a preferred embodiment, the connecting means comprise a plate 16 suitable for being connected to ski 14 and to frame 3. Plate 16 determines, with the prevailing extension thereof, a plate plane.

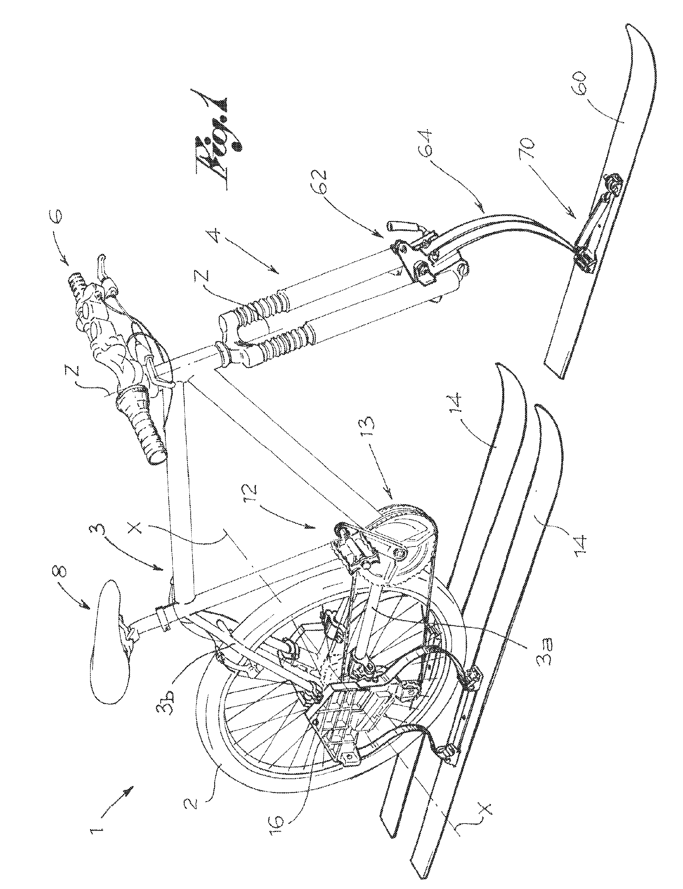

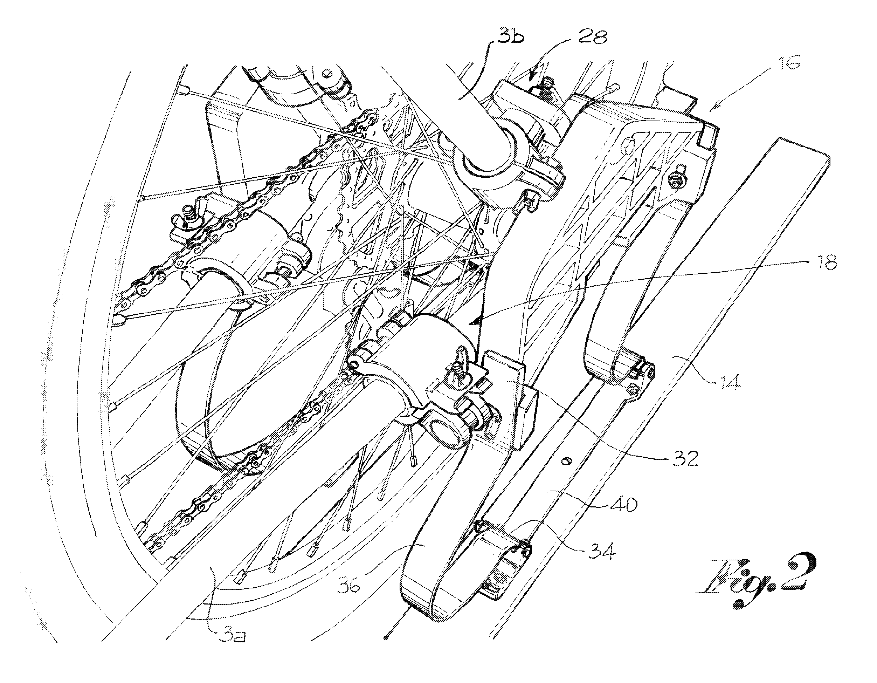

Moreover, said connecting means comprise a first adaptation unit 18 (figure 2), suitable for connecting said plate 16 to said first bar 3a of frame 3.

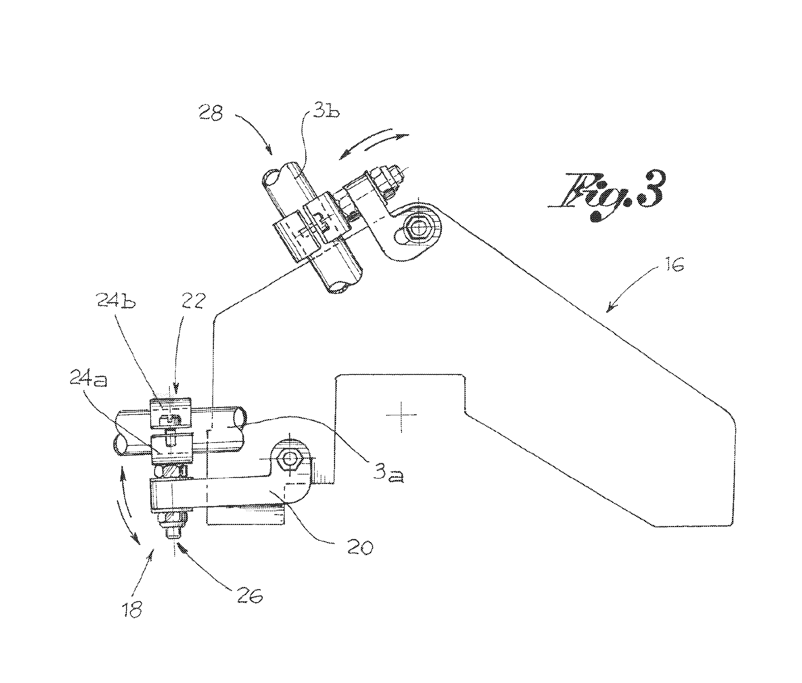

The first adaptation unit comprises a first adaptation element 20 (figure 3), connectable in a fixed manner to plate 16 and turnable about a first adaptation axis, perpendicular to said plate 16.

Moreover, the first adaptation unit comprises a hooking flange 22 suitable for hooking to said bar 3a, for example tightening about the outer surface of a portion of said bar.

Preferably, said hooking flange 22 comprises a first half-body 24a and a second half-body 24b suitable for tightening about a bar of different diameter or thickness, for example by a bolt system.

The first adaptation unit 18 preferably comprises a soft insert, for example made of leather, suitable for being arranged between flange 22 and the bar, for preventing scratches and the like.

Moreover, the first adaptation unit 18 comprises a spacer element 26 suitable for connecting said adaptation element 20 to said flange 22 so as to adjust the distance between said adaptation element 20 and said flange 22, for example by a bolt and shim system.

Moreover, said spacer element 26 is suitable for adjusting the arrangement of said flange 22 by a rotation about a second adaptation axis, perpendicular to said first adaptation axis.

Moreover, said connecting means comprise a second adaptation unit 28 (figure 3), suitable for connecting said plate 16 to said second bar 3b of frame 3. Said second adaptation unit 28 is structurally and functionally similar to said first adaptation unit 18.

According to a preferred embodiment, said connecting means comprise elastic connecting means, that is, means suitable for deforming, for example for following the irregularities of the snow covered roadbed or following the weight of the frame or of the driver.

According to a preferred embodiment, said elastic means comprise at least one laminated spring 30 operatively connected to said plate 16 and to said ski 14. Preferably, each ski 14 is connected to said plate 16 by two laminated springs.

According to a preferred embodiment, said laminated spring 30 comprises an initial portion 32 (figure 2) for the connection to plate 16, an end portion 34 for the connection to the ski, and an intermediate flexible portion 36.

Said flexible portion 36 is arched and arranged so as to face the convex portion thereof towards the front side of the vehicle.

According to a preferred embodiment, said connecting means further comprise means for orientating the ski suitable for adjusting and fixing the ski convergence and/or sharp edge.

Let's assume that the vehicle proceeds along a rectilinear direction, which defines a forward movement axis, on a perfectly horizontal plane, and that the plane determined by the ski sole is defined as ski plane, while the axis along which the ski exhibits the prevailing extension thereof is defined as ski axis.

Convergence is the angle formed by the ski axis with the forward movement axis on the ski plane.

Sharp edge is the angle formed by the ski plane with the horizontal plane on which the vehicle proceeds. Intuitively, the sharp edge is the rotation of the ski about the longitudinal ski axis thereof.

Said orientation means suitable for adjusting and fixing the ski convergence comprise an adjustment element 40 fixed to ski 14 at the top surface thereof, so as to be turnable about a convergence axis perpendicular to the ski plane.

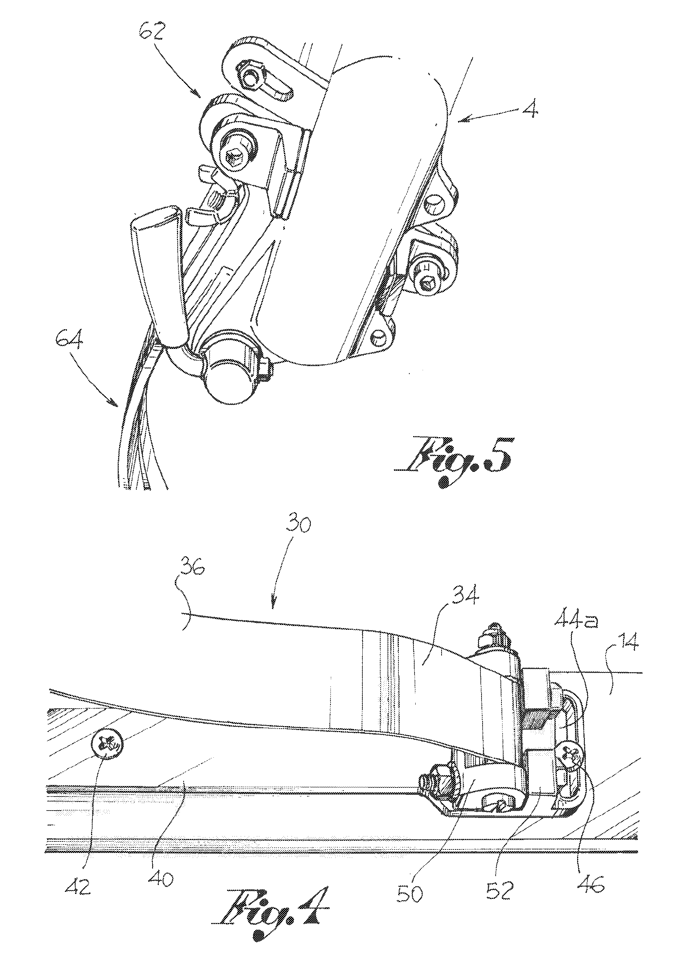

In particular, said adjustment element 40 is fixed to the ski in a fixing point 42 (figure 4), for example by a screw.

Said adjustment means 40 comprises slots 44a, 44b arranged at the ends of said adjustment means.

Said slots are suitable for seating a fixing element 46, for example a screw, suitable for fixing the adjustment element 40 to the ski in a predetermined position.

In a variation of embodiment, said laminated spring 30 is directly connected to said adjustment means 40.

Said orientation means suitable for adjusting and fixing the ski sharp edge comprise an adjustment body 50 hinged to the ski turnable about said longitudinal ski axis or an axis parallel to said ski axis. Said body 50 is fixable in a predetermined position rotated relative to said ski plane by a fixing element, for example a screw, movable into a slot of a block 52 integral to the ski 14.

According to a variation of embodiment, the laminated spring 30 is directly hinged to said adjustment body 50.

According to a variation of embodiment, said adjustment means 40 comprises said block 52 and said body 50 couples to said adjustment element 40.

In a preferred embodiment, said assembly comprises a front conversion unit comprising a front ski 60 (figure 1) and front connecting means for the connection of said front ski 60 to the vehicle fork.

According to a preferred embodiment, said front connecting means comprise a clamping unit 62 suitable for connecting said front ski to the fork tines.

Said clamping unit 62 is suitable for being associated to tines having different nominal shape and size, for example diameter or thickness.

Moreover, said front connecting means comprise a front laminated spring 64, for example consisting of two sided elements, connected to said clamping unit 62 and to said front ski 60.

According to an even further embodiment, said connecting means comprise said orientation means associated to said front ski.

Preferably, moreover, said connecting means comprise shock absorbing means suitable for absorbing the influence of the snow covered roadbed on the inclination of the front ski.

According to a preferred embodiment, said absorbing means comprise a dual effect shock absorber 70 connected at an end to the ski and, at the other end, to the front laminated spring 64.

Preferably, said assembly comprises two rear conversion units, each comprising a plate 16, a rear ski 14 and connecting means, and a front conversion unit.

For the conversion of a road vehicle, for example a bike, into a snow vehicle by said conversion assembly, the front wheel of the road vehicle is removed from the fork and the tines thereof are associated to the front conversion unit, comprising the clamping unit 62, to be connected to the fork tines, the front laminated spring 64 and the front ski 60.

Moreover, plate 16 is associated to the first bar 3a and to the second bar 3b of frame 3.

In particular, the first adaptation unit is connected to the first bar 3a and the second adaptation unit is connected to the second bar 3b.

Advantageously, the adaptation units are turnable relative to plate 16 so as to arrange ski 14 substantially parallel to the roadbed, irrespective of the specific frame structure, that is, irrespective of the inclination of the bars forming said frame.

Advantageously, moreover, flanges 22 are suitable for hooking said bars irrespective of the diameter or thickness thereof, and are turnable, to mount plate 16 so as to arrange ski 14 substantially parallel to the roadbed.

Moreover, the ski convergence is adjusted and fixed by operating on said orientation means.

In particular, the fixing element 46 is released and the ski is rotated about the convergence axis perpendicular to the ski plane. Once the convergence has been adjusted as desired, the fixing element 46 is screwed into slot 44a, thus locking the ski inclination.

Moreover, the ski sharp edge is adjusted and fixed by operating on said orientation means.

In particular, the fixing element connected to the outer slot of block 52 is released and the adjustment body 50 is rotated (figure 4).

Once the sharp edge has been adjusted, the fixing element is screwed into the slot of block 52, thus locking said sharp edge.

Moreover, with the driver on board of the vehicle, the rear vehicle wheel may be too low, that is, too immersed into the snow covered roadbed, or too high, that is, such as to slightly touch or even not touch the roadbed, and therefore the proper vehicle forward movement is not ensured.

In such situation, the connection between the rear laminated springs and plate 16 is adjusted, raising or lowering the rear wheel.

Advantageously, when the snow vehicle must be reconverted into a road vehicle, each rear conversion unit can be disconnected from the frame by operating on the adaptation units, leaving the ski orientation conditions unchanged, for a subsequent installation.

Innovatively, the assembly according to the present invention allows converting a road vehicle into a snow vehicle irrespective of the structural features of the frame of a large number of road vehicles, such as bikes.

According to an even further advantageous aspect, the assembly allows being coupled to the vehicle without structurally modifying said vehicle, that is, for example without making holes on the frame.

Advantageously, moreover, said assembly allows a ski orientation according to the user's needs or preferences.

According to an even further advantageous aspect, said ski orientation remains fixed even when the conversion units are disconnected from the frame, thus avoiding the need of adjusting the orientation at every new conversion of the vehicle.

It is clear that a man skilled in the art can make several changes and adjustments to the assembly described above in order to meet specific and incidental needs, all falling within the scope of protection defined in the following claims.

## Claims

1. A conversion assembly suitable for converting a road vehicle into a vehicle suitable for moving on a snow covered roadbed, wherein said road vehicle comprises
- at least one wheel (2) actuated in rotation about a wheel axis (X-X) for moving said vehicle;
- a frame (3) suitable for supporting a driver, operatively associated to said wheel;
wherein said assembly comprises
- at least one ski (14) suitable for supporting and for making said snow vehicle sliding on said snow covered roadbed;
- connecting means suitable for connecting said ski to said frame;
said assembly being **characterised in that** said connecting means comprise adjustment means suitable for orientating and fixing said ski into a predetermined arrangement relative to said wheel axis (X-X).

2. An assembly according to the previous claim, wherein said connecting means comprise a plate (16), defining a plate plane, connectable to said frame (3) and adaptation units (18, 28) for the connection of said plate to said frame (3).

3. An assembly according to claim 2, wherein said adaptation unit comprises a first adaptation element (20) connectable in a fixed manner to said plate (16) and suitable for rotating about a first adaptation axis, perpendicular to said plate plane.

4. An assembly according to claim 2 or 3, wherein said adaptation unit comprises a hooking flange (22) suitable for hooking to a bar (3a, 3b) of said frame (3).

5. An assembly according to claim 4, wherein said flange (22) tightens about the outer surface of said bar.

6. An assembly according to claim 4 or 5, comprising an insert of soft material to be arranged between said flange and said bar for preventing scratches and the like.

7. An assembly according to any one of claims 4 to 6, further comprising a spacer element (26), that connects said adaptation element (20) to said flange (22), suitable for adjusting the arrangement of the flange (22) by a rotation about a second adaptation axis.

8. An assembly according to any one of the previous claims, wherein said connecting means comprise elastic connecting means suitable for deforming.

9. An assembly according to claim 8, wherein said elastic means comprise at least one laminated spring (30).

10. An assembly according to claim 9, wherein said laminated spring comprises an intermediate arched flexible portion (36), convex towards the front side of the vehicle.

11. An assembly according to any one of the previous claims, wherein said connecting means comprise means for orientating the ski (14) suitable for adjusting and fixing the ski convergence and/or sharp edge.

12. An assembly according to claim 11, wherein said means suitable for adjusting and fixing the ski convergence comprise an adjustment element (40) fixed to the ski (14) and turnable about a convergence axis perpendicular to the ski plane.

13. An assembly according to claim 12, wherein said adjustment element (40) comprises at least one slot (44a, 44b) suitable for seating a fixing element (46) for fixing the convergence.

14. An assembly according to any one of claims 11 to 13,
wherein said means suitable for adjusting and fixing the sharp edge of the ski comprise an adjustment body (50) turnable about said ski axis or an axis parallel thereto and fixable in a predetermined position rotated relative to said ski plane through an engagement with a block (52) integral to the ski (14).

15. An assembly according to any one of the previous claims, wherein said assembly comprises a front conversion unit comprising a ski (60) and front connecting means for the connection of said ski to a fork (6) turnable for setting the forward direction of said vehicle (1).

16. An assembly according to claim 15, wherein said front connecting means comprise a clamping unit (62) for connecting the ski (60) to the fork tines.

17. An assembly according to claim 16, wherein said front connecting means comprise a front laminated spring (64) for connecting the ski (60) to said clamping unit (62).

18. An assembly according to one of claims 15 to 17,
wherein said front adaptation unit comprises means for orientating the ski.

19. An assembly according to any one of claims 15 to 18,
wherein said front adaptation unit comprises shock absorbing means.

20. A snow vehicle comprising a wheel (2), a frame (3), a handlebar (6) and an assembly manufactured according to any one of the previous claims, wherein said assembly comprises two rear skis (14).
